(19)

Europäisches
Patentamt

European
Patent Office

Office européen
des brevets

(11) **EP 4 693 785 A1**

(12) **EUROPEAN PATENT APPLICATION**

(43) Date of publication:
 **11.02.2026 Bulletin 2026/07**

(21) Application number: **24206192.7**

(22) Date of filing: **11.10.2024**

(51) International Patent Classification (IPC):
 **H02J 1/00** *(2026.01)* **H02J 1/06** *(2026.01)*

(52) Cooperative Patent Classification (CPC):
 **H02J 1/002; H02J 1/06**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **09.08.2024 EP 24193856**

(71) Applicant: **ABB SCHWEIZ AG
 5400 Baden (CH)**

(72) Inventors:
 • **STRAGIES, Michael
 37079 Göttingen (DE)**
 • **HORST, Georg
 37154 Northeim (DE)**
 • **WIEDERHOLD, Frank
 34369 Hofgeismar (DE)**

(74) Representative: **Maiwald GmbH
 Engineering
 Elisenhof
 Elisenstrasse 3
 80335 München (DE)**

(54) **A FIELD DEVICE FOR PROVIDING A SENSOR UNIT WITH ENERGY FROM A NETWORK**

(57)   The invention relates to the field of field devices, particularly to a field device (100) designed for providing a sensor unit (300) with energy from a 2-wire network (200). The field device (100) comprises:
a first input terminal (210), configured for being connected to a first wire of the network (200); a second input terminal (220), configured for being connected to a second wire of the network (200);
a first output terminal (180), configured for being connected to a first wire of the sensor unit (300); a second output terminal (190), configured for being connected to a second wire of the sensor unit (300);
a rectifier unit (105), whose first part is arranged between the first input terminal (210) and a first node (110) and whose second part is arranged between the second input terminal (220) and a second node (120), wherein the first node (110) is connected to the first output terminal (180);
a current measurement device (115), arranged between the second node (120) and a third node (130), for measuring a measured current ($I_M$) between the second node (120) and the third node (130);
a voltage measurement device (125) for measuring a measured voltage ($_{VM}$) between the first node (110) and the second node (120);
a first semiconductor (140), arranged between the first node (110) and the third node (130) and configured for passing through a bypass current ($I_B$) through the first semiconductor (140), so that the measured current ($I_M$), which is a sum of the bypass current ($I_B$) and a load current ($I_L$) through the sensor unit (300), comprises a two-part curve, with a negative linear current-voltage-correlation in a lower voltage-section and a constant current in an upper voltage-section; and
a second semiconductor (150), arranged between the third node (130) and the second output terminal (190).

**Fig. 1**

## Description

Technical Field

The invention relates to the field of field devices, particularly field devices that provide a sensor unit with energy from a network. The invention further relates to a field device system and to a use.

Background

Several types of networks are able and defined for providing a device that is connected to one of said network with energy. Examples may comprise networks that provide Ethernet connectivity and are applicable for 2-wire Ethernet topologies, such as Ethernet APL (Advanced Physical Layer) or Ethernet SPE (Single Pair Ethernet) networks. However, these networks have some divergent specifications, e.g. a differing supply voltage, and other restrictions, e.g. a minimum current that need to flow through each field device that is connected to one of said network. Hence, it would be desirable to have a field device, which can deal with at least both of these network types and fulfils both specifications.

Description

It is an objective of the disclosure to provide a field device that can be connected to both Ethernet APL (Advanced Physical Layer) and Ethernet SPE (Single Pair Ethernet) networks. This objective is achieved by the subject-matter of the independent claims. Further embodiments are evident from the dependent claims and the following description.

One aspect relates to a field device that is designed for providing a sensor unit with energy from a 2-wire network. The field device comprises:

a first input terminal, configured for being connected to a first wire of the network;
a second input terminal, configured for being connected to a second wire of the network;
a first output terminal, configured for being connected to a first wire of the sensor unit;
a second output terminal, configured for being connected to a second wire of the sensor unit;
a rectifier unit, whose first part is arranged between the first input terminal and a first node and whose second part is arranged between the second input terminal and a second node, wherein the first node is connected to the first output terminal;
a current measurement device, arranged between the second node and a third node, for measuring a measured current between the second node and the third node;
a voltage measurement device for measuring a measured voltage between the first node and the second node;
a first semiconductor, arranged between the first node and the third node and configured for passing through a bypass current through the first semiconductor, so that the measured current, which is a sum of the bypass current and a load current through the sensor unit, comprises a two-part curve, with a negative linear current-voltage-correlation in a lower voltage-section and a constant current in an upper voltage-section; and
a second semiconductor, arranged between the third node and the second output terminal.

The field device may be designed as a kind of "field device core" or "electrical intermediate piece" between the Ethernet-based network and the sensor unit. The Ethernet-based network may be, e.g., an Ethernet APL (Advanced Physical Layer) or an Ethernet SPE (Single Pair Ethernet) network. The supply voltage of the Ethernet APL is defined between 9.6 V and 15 V, and the supply voltage of the Ethernet SPE (port classes 10, 11, 12) is defined between 20 V and 30 V. Other types of Ethernet SPE may have higher voltages. Each field device that is connected to these types of Ethernet-based network needs to fulfil at least a certain set of restrictions, in order to guarantee a well-working network-system. These restrictions may comprise that current change caused by a field device connected to this network should not have a higher current change rate than 10 mA/ms. Further restrictions may apply as well.

Since not all sensor units can guarantee this, measures need to be taken to comply with these restrictions.

The first input terminal and the second input terminal may be connected to the network, e.g., via clamps and/or other types of connectors.

The sensor unit - or "load" - may be configured for performing measurements, in at least some cases including evaluating the measurements, of, e.g., temperature, pressure, flow, and/or distance. The sensor unit may comprise a sensor frontend, e.g. for said applications, and/or a display for displaying any kind of values and/or graphics, particularly measurement values. The sensor unit may comprise a processor, e.g. with memory, which may serve as control unit, as data processing unit and/or for other purposes, e.g. for programming EEPROMS. Hence, the sensor unit may, on the one hand, have fluctuating current, while the Ethernet-based network defines a minimum and a maximum current that can (and/or needs to) be delivered to each sensor unit that is connected to this network.

The rectifier unit may comprise a bridge rectifier or a serial diode. The rectifier may comprise measures that provide a constant current.

The current measurement device may be implemented as a serial or "shunt" resistor, as a Hall sensor and/or as another type of device. The current measurement device measures a current that passes both through the sensor unit and through the controlling components (e.g. first and second semiconductor) of the field device.

The voltage measurement device may be a high-impedance device. The voltage measurement device is configured for measuring a measured voltage between the first node and the second node.

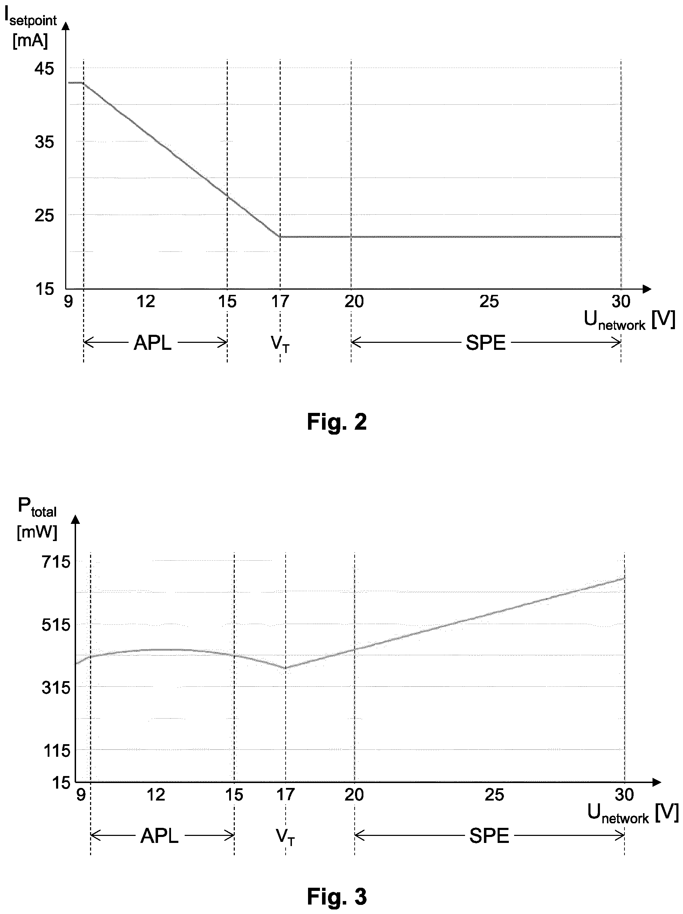

The first semiconductor is arranged between the first node and the third node and is essential parallel to the load or sensor unit. The first semiconductor is configured for passing through a bypass current through the first semiconductor; this current may be controlled by a first control unit. The controlling may be designed in a way, that the measured current, which is a sum of the bypass current and a load current through the sensor unit, is controlled by controlling the bypass current. The measured current may be called the target value of this controlled field device. The measured current can be depicted by a two-part curve, e.g. the one shown in **Fig. 2.** The first part or lower voltage-section part of said curve has a negative linear current-voltage-correlation, i.e. this part is a linear decreasing function, with a current that is the lower the higher the voltage from the network is, in other words to decrease the current linear with the increasing voltage, until the current reaches his lower limit. The second part or upper voltage-section part of said curve has a constant current, i.e. the measured current stays the same in this section. In addition, a lowest voltage-section may be realized, with a constant current for voltages below the lower voltage-section part. This may be realized within the first control unit, and may be implemented by a resistor network including active parts like op-amps.

The second semiconductor is arranged between the third node and the second output terminal. It may advantageously be used to limit the current through the sensor unit.

This field device may support a broad voltage range. Thus, it can advantageously be connected to a broad range of Ethernet-based network types and/or sub-types. Particularly, this field device can advantageously be connected to both Ethernet APL (Advanced Physical Layer) and Ethernet SPE (Single Pair Ethernet) networks. Furthermore, the field device fulfils the restriction of a current change rate that is not higher than 10 mA/ms, the current change rate caused by the field device plus the sensor unit, which may be connected to this network as a kind of system. And, the linear current-voltage-correlation allows an implementation in a circuit with linear parts, so that the implementation can be comparably simple. And, a fast control can be implemented, having nevertheless a low risk of an oscillating control loop. In addition, the field device can realize - e.g. in the APL voltage range - a relatively constant power consumption. This may be particularly advantageous for field devices that need to fulfil "Ex" (explosive environment) specifications, e.g. by keeping the overall heating of the device small, which may contribute for complying with an Ex-temperature-rating, particularly due to a lower power consumption.

In various embodiments, the second semiconductor is configured for being initially closed and for opening slowly during a start-up phase. "Initially" may mean: right after having turned on the field device or, e.g., after a hardware reset. Opening slowly (i.e. some ms) may be realized by an RC-component, possibly connected to an amplifier.

In various embodiments, the second semiconductor is further configured for limiting the measured current. This may be particularly advantageous in a case of a fault in the sensor unit.

In various embodiments, the network is an Ethernet-based network, particularly a 2-wire Ethernet-based network, for instance an Ethernet APL network or an Ethernet SPE network. These networks define sub-types. The field device may be configured for being connected to one or more sub-types of these networks.

These networks may enable to provide the field device's power only from the Ethernet-based network. Due to this, additional power supply units may become obsolete. Specifications of such networks may be found, e.g., in IEEE Standard for Ethernet Amendment 5: "Physical Layers Specifications and Management Parameters for 10 Mb/s Operation and Associated Power Delivery over a Single Balanced Pair of Conductors". For example, the Ethernet-based APL (Advanced Physical Layer) is defined for a voltage range between 9.6 V and 15 V, the Ethernet-based SPE (Single Pair Ethernet) is defined for a voltage range between 20 V and 30 V, for port classes 10, 11, and 12. This may allow to use one design for multiple 2-wire network standards.

In various embodiments, a kink voltage, which defines a kink in a control curve, is a voltage between a voltage range of the Ethernet APL network and a voltage range of the Ethernet SPE network, wherein the control curve implements a dependency of a maximum setpoint-current on a network voltage. An example of such a control curve is depicted in **Fig. 2.** The Ethernet APL network - A or C type - is defined for a voltage range between 9.6 V and 15 V, or between 11.61 V and 15 V, respectively. The Ethernet SPE network is defined for a voltage range between 20 V and 30 V. Hence, when the field device is to support both of these networks, the kink voltage would be any voltage between 15 V and 20 V (or, in some cases, higher), e.g. 17 V, 18 V, etc. Below the kink voltage, a negative linear correlation between the maximum setpoint-current and the network voltage may be implemented, and above the kink voltage, a constant correlation between the maximum setpoint-current and the network voltage may be implemented.

In various embodiments, the network has a voltage range between 5 V and 50 V, particularly between 9 V and 30 V. Basically, the field device described above and/or below may be used for a really broad range of field devices. This broad range may be limited, e.g., by the voltage range of the semiconductors that are used for the field device and/or by cost or cost-effectiveness considerations. The control curve with the kink between two voltage sub-ranges (e.g. a lower and an upper voltage range) may advantageously contribute that the field device can be used within such a broad voltage range of the network.

In various embodiments, the first semiconductor is further configured for realizing that the measured current is not lower than a lower current limit. The lower current limit may be defined by the network, e.g. a minimum current that needs to flow through each field device that is connected to said network. Some networks may, e.g., define a minimum current of - say - 10 mA, to make it easier to differentiate connected devices from not-connected devices, and/or for a higher stability and/or less current-fluctuation within the network.

In various embodiments, the first semiconductor is further configured for realizing that the bypass current is not higher than a maximum current, the maximum current being defined by a maximum allowed power dissipation of the first semiconductor. This may advantageously save the first semiconductor from a damage and/or early degradation by heat.

In various embodiments, the first semiconductor and/or the second semiconductor is a bipolar semiconductor, a MOSFET, a PMOS and/or an NMOS semiconductor. NMOS semiconductors may be preferred by their electric characteristic and/or because, usually, a broader range of NMOS semiconductors types may be available than of PMOS semiconductors.

An aspect relates to a field device system, comprising a field device as described above and/or below and a sensor unit as described above and/or below. The sensor unit may be adapted to the field device, e.g. specified for a predefined voltage range and/or current range.

An aspect relates to a use of a field device as described above and/or below for providing a sensor unit with energy from a network, particularly from an Ethernet-based network.

For further elucidation, the disclosure is described by means of embodiments shown in the figures. These embodiments are to be considered as examples only, but not as limiting.

Brief Description of the Drawings

The drawings depict:

Fig. 1    schematically a field device according to an embodiment;

Fig. 2    a dependency of a maximum setup-current from a voltage of the network according to an embodiment;

Fig. 3    a dependency of a maximum power of the field device from a voltage of the network according to an embodiment;

Fig. 4    a control unit according to an embodiment.

Detailed Description of Embodiments

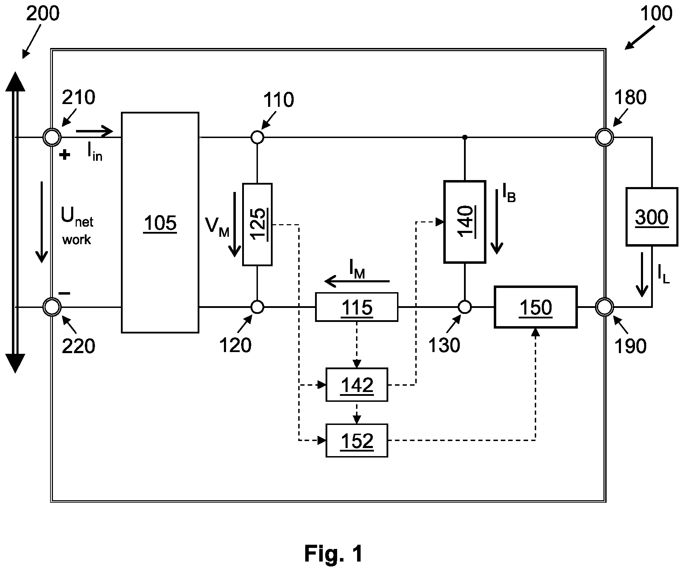

Fig. 1 schematically shows a field device 100, which is arranged between a network 200 and a sensor unit 300. The field device 100 provides the sensor unit 300 with energy from the network 200. The energy from the network 200 may be the only power supply of the sensor unit 300. The sensor unit 300 is supplied via output terminals 180 and 190. The sensor unit 300 may be a separate device, or may be integrated into the field device 100. The sensor unit 300 may be detachably coupled to the field device 100. The network 200 may be an Ethernet-based network, for instance Ethernet APL, Ethernet SPE, or another type of 2-wire network. The field device 100 is connected to the network 200 via terminals 210 and 220. The terminals 210 and 220 may be realized, e.g., as screw or clamping terminal or via an M8 or M12 connector.

The terminals 210 and 220 are connected to a rectifier unit 105, which is arranged between the network 200 (or: the terminals 210 and 220) and a first node 110. Between the between the second node 120 and a third node 130, a current measurement device 115 is arranged. The current measurement device 115 measures a measured current $I_M$ between the second node 120 and a third node 130. This current $I_M$ may be essentially the total current through the sensor unit 300 plus through the controlling devices, i.e. through a first semiconductor 140 and a second semiconductor 150, plus some minor consumers. The field device further comprises a voltage measurement device 125 for measuring a measured voltage $V_M$ between the first node 110 and the second node 120.

The first semiconductor 140 is arranged between the first node 110 and the third node 130 and, thus, essentially parallel to the sensor unit 300. The second semiconductor 150 is arranged between the third node 130 and the second output terminal 190 and is controlled by a second control unit 152. The first semiconductor 140 is configured for passing through a bypass current $I_B$ through the first semiconductor 140, thus controlling the measured current $I_M$, which is a sum of the bypass current $I_B$ and a load current $I_L$ through the sensor unit 300. The first semiconductor 140 is controlled by a first control unit 142, which uses the measured voltage $V_M$ and the measured current $I_M$ as inputs. The first control unit 142 controls the bypass current $I_B$ through the first semiconductor 140 in a way, that a current-voltage-correlation can be reached, as exemplarily shown in **Fig. 2.**

Said **Fig. 2** shows an exemplary dependency of a maximum setpoint-current $I_{setpoint}$ on a voltage $U_{network}$ of the network according to an embodiment. In the example shown, a control function for a field device is depicted, which supports both an Ethernet APL network (type A), with a voltage range between 9.6 V and 15 V, and an Ethernet SPE, with a voltage range between 20 V and 30 V. The control function comprises a two-part curve.

This two-part curve has a lower voltage-section - in Fig. 2 between 9.6 V and a kink voltage $V_T$, between terminals 210 and 220, of (exemplarily) 17 V. In the lower voltage-section, a negative linear current-voltage-correlation can be seen, with a maximum current of 43 mA at 9.6 V, and a minimum current of 22 mA at 17 V, and linearly decreasing between these points. In an upper voltage-section, which follows the lower voltage-section, a constant current of 22 mA can be seen, spreading from the kink voltage $V_T$ of (exemplarily) 17 V up to the maximum supported voltage of 30 V. The current at the input terminals 210 and 220 may be selected depending on the power $P_{input}$ at the terminals 210 and 220, to support - by means of the field device 100 - the sensor unit 300 at the terminals 180 and 190.

For example, for $P_{input}$ = 375 mW, with an input voltage $U_{network}$ of 9 V at the terminals 210 and 220, the required input current $I_{in}$ would be:

$$I_{in} = 375 \text{ mW} / 9 \text{ V} \approx 42 \text{ mA}$$

Under this assumption, the kink voltage $V_T$ is, then, selected in a way to get a similar power $P_{input}$ at $V_T$ for a selected current $I_L$. For example, for a current of $I_L$ = 22 mA, the kink voltage $V_T$ is:

$$V_T = 375 \text{ mW} / 22 \text{ mA} \approx 17 \text{ V}$$

Note that this example is only a rough computation example of the values of interest. Particularly, the power for the controlling components of the field device 100, e.g. the first and second control unit 142 and 152, is neglected. For a detailed computation, additional factors - e.g. selection tolerances, temperature drift and/or further aspects - may be considered. It is also possible to select different input powers at both ends of the lower voltage section because of any reason, for example 400 mW at the lower end (e.g. at 9.6 V) and 450 mW at the upper end (e.g. at 22.5 V). Applied to this example, the current at the lower end would be about 400 mW / 9.6 V $\approx$ 42 mA and the voltage at the upper end and for 22 mA would be about 450 mW / 22 mA $\approx$ 20.5 V.

Results of selecting the diagram of **Fig. 2** as a control curve are depicted in **Fig. 3. Fig. 3** shows an exemplary dependency of a maximum power of the field device 100 on a voltage $U_{network}$ of the network according to an embodiment, based on the control curve of **Fig. 2.** The power consumed in the field device 100 is essentially a product of $V_M$ and $I_M$ (neglecting some minor consumers). As can be seen in **Fig. 3,** the current control curve of **Fig. 2** leads to a quite stable power consumption over the complete lower voltage-section. The curve of **Fig. 3** may also be considered when selecting the kink voltage $V_T$: This voltage $V_T$ may be selected in a way that the power consumed at $V_T$ is roughly the same as the power consumed at the lowest voltage of the lower voltage-section.

When looking at **Fig. 3,** it can clearly be seen that the quite easy-to-implement control curve of **Fig. 2** leads to a quite stable power consumption over the complete lower voltage-section. Furthermore, the control can be very fast, so that the current changes caused by the field device have no higher current change rate than 10 mA/ms (as specified for at least some Ethernet-based networks), usually significantly below this. On the other hand, it turned out that the linear control curve is a measure that reduces the risk of an oscillating control significantly. Besides, this field device can be used for a broad voltage range. Thus, it can advantageously be connected to a broad range of Ethernet-based network types and/or sub-types, as exemplarily shown for Ethernet APL and Ethernet SPE networks.

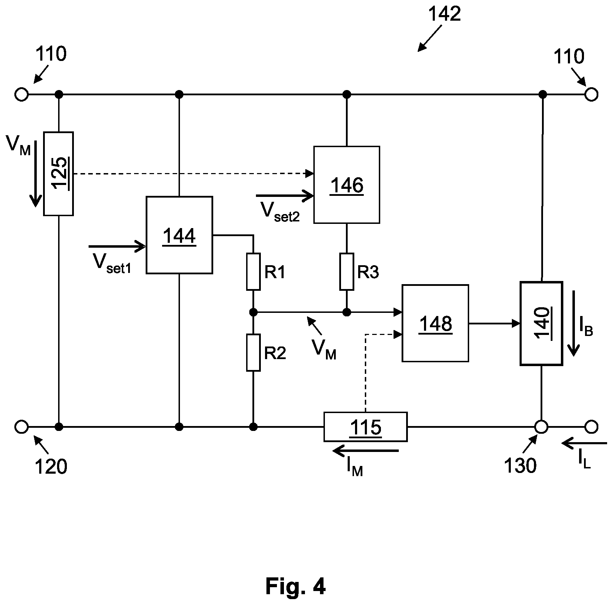

**Fig. 4** shows an exemplary implementation of a control unit 142 according to an embodiment. The first control unit 142 comprises a Y-shaped resistor network, whose middle node M is led to a controller 148, which controls the first semiconductor 140 (see **Fig. 1**). A second input of the controller 148 is connected to current measurement device 115. The current measurement device 115 measures the measured current $I_M$, which is a sum of a bypass current $I_B$, through the first semiconductor 140, and a load current $I_L$, through the sensor unit 300 (see **Fig. 1**). A left branch of the Y-shaped resistor network comprises resistors R1 and R2 in series, which build a voltage divider of a constant voltage from a voltage reference 144. R1 may be significantly higher than R2. Setpoint $V_{set1}$ sets a value that determines the constant current for the upper voltage-section. A left branch of the Y-shaped resistor network comprises resistor R3 (and common resistor R2), R3 in series with a setpoint adjustment unit 146. The setpoint adjustment unit 146 adjusts the setpoint voltage $V_{set2}$ by means of R3, for the lower voltage-section, so that the first semiconductor 140, for this voltage-section, is only controlled by the left branch of the Y-shaped resistor network. The setpoint adjustment unit 146 has an input $V_{set2}$, which sets the kink voltage $V_T$, from which point the resistance through setpoint adjustment unit 146 is decreased, so that the linear curve of the lower voltage-section can be implemented. The other input of the setpoint adjustment unit 146 compares the voltage $V_{set2}$ with the measured (actual) voltage $V_M$.

<u>List of Reference Symbols</u>

| | |
|---|---|
| 100 | field device |
| 105 | rectifier unit |
| 110 | first node |
| 115 | current measurement device |
| 120 | second node |
| 125 | voltage measurement device |
| 140 | first semiconductor |
| 142 | first control unit |

144    voltage reference
146    setpoint adjustment unit
148    controller
150    second semiconductor
152    second control unit
160    reference node
170    controller
180    first output terminal
190    second output terminal
200    network
210    first input terminal
220    second input terminal
300    sensor unit, load

**Claims**

1. A field device (100) designed for providing a sensor unit (300) with energy from a 2-wire network (200), the field device (100) comprising:

    a first input terminal (210), configured for being connected to a first wire of the network (200);
    a second input terminal (220), configured for being connected to a second wire of the network (200);
    a first output terminal (180), configured for being connected to a first wire of the sensor unit (300);
    a second output terminal (190), configured for being connected to a second wire of the sensor unit (300);
    a rectifier unit (105), whose first part is arranged between the first input terminal (210) and a first node (110) and whose second part is arranged between the second input terminal (220) and a second node (120), wherein the first node (110) is connected to the first output terminal (180);
    a current measurement device (115), arranged between the second node (120) and a third node (130), for measuring a measured current ($I_M$) between the second node (120) and the third node (130);
    a voltage measurement device (125) for measuring a measured voltage ($_{VM}$) between the first node (110) and the second node (120);
    a first semiconductor (140), arranged between the first node (110) and the third node (130) and configured for passing through a bypass current ($I_B$) through the first semiconductor (140),
    so that the measured current ($I_M$), which is a sum of the bypass current ($I_B$) and a load current ($I_L$) through the sensor unit (300), comprises a two-part curve, with a negative linear current-voltage-correlation in a lower voltage-section and a constant current in an upper voltage-section; and
    a second semiconductor (150), arranged between the third node (130) and the second output terminal (190).

2. The field device (100) of claim 1, wherein the second semiconductor (150) is configured for being initially closed and for opening slowly during a start-up phase.

3. The field device (100) of claim 1 or 2, wherein the second semiconductor (150) is configured for limiting the measured current ($I_M$), particularly in a case of a fault in the sensor unit (300).

4. The field device (100) of any one of the preceding claims, wherein the network (200) is an Ethernet-based network, particularly an Ethernet APL network or an Ethernet SPE network.

5. The field device (100) of any one of the preceding claims,

    wherein a kink voltage ($V_T$), which defines a kink in a control curve, is a voltage between a voltage range of the Ethernet APL network and a voltage range of the Ethernet SPE network,
    the control curve implementing a dependency of a maximum setpoint-current ($I_{setpoint}$) on a network voltage ($U_{network}$).

6. The field device (100) of any one of the preceding claims, wherein the network voltage ($U_{network}$) of the network (200) has a voltage range between 5 V and 50 V, particularly between 9 V and 30 V.

7. The field device (100) of any one of the preceding claims, wherein the first semiconductor (140) is further configured for realizing that the measured current ($I_M$) is not lower than a lower current limit.

8. The field device (100) of any one of the preceding claims, wherein the first semiconductor (140) is further configured for realizing that the bypass current ($I_B$) is not higher than a maximum allowed power dissipation of the first semiconductor (140).

9. The field device (100) of any one of the preceding claims, wherein the first semiconductor (140) and/or the second semiconductor (150) is a bipolar, a MOSFET, a PMOS and/or an NMOS semiconductor.

10. A field device system, comprising a field device (100) of any one of the preceding claims and a sensor unit (300).

11. Use of a field device (100) of any one of the claims 1 - 9 for providing a sensor unit (300) with energy from a network (200), particularly from an Ethernet-based network.

**Fig. 1**

**Fig. 2**

**Fig. 3**

**Fig. 4**

| Europäisches Patentamt European Patent Office Office européen des brevets | **EUROPEAN SEARCH REPORT** | **Application Number** EP 24 20 6192 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/066496 A1 (INNOSYS INC [US]) 20 April 2017 (2017-04-20) * paragraphs [0013] - [0039]; figures 1,2,3,4,5 * ----- | 1-11 | INV. H02J1/00 H02J1/06 |
| A | US 2017/041153 A1 (PICARD JEAN [US] ET AL) 9 February 2017 (2017-02-09) * paragraphs [0143] - [0156]; figures 40,41,42 * ----- | 1-11 | |

| | TECHNICAL FIELDS SEARCHED (IPC) |
|---|---|
| | H02J |

The present search report has been drawn up for all claims

| Place of search | Date of completion of the search | Examiner |
|---|---|---|
| Munich | 11 March 2025 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6192

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | Publication date |
|---|---|---|---|
| WO 2017066496 A1 | 20-04-2017 | NONE | |
| US 2017041153 A1 | 09-02-2017 | US 2017041153 A1 | 09-02-2017 |
| | | US 2019327101 A1 | 24-10-2019 |

EPO FORM P0459

For more details about this annex : see Official Journal of the European Patent Office, No. 12/82